# EUROPÄISCHE PATENTSCHRIFT

(11) **EP 1 063 489 B1**
(45) Veröffentlichungstag und Bekanntmachung des Hinweises auf die Patenterteilung: **13.08.2003**
(21) Anmeldenummer: 00113289.3
(22) Anmeldetag: 21.06.2000
(51) Int. Cl.: F28D 20/02, F24C 15/34

(54) **Gargerät mit Speicherelement zum Speichern von Energie**
Cooking device with storage element for storing energy
Appareil de cuisson avec élément de stockage pour stocker de l'énergie

(30) Priorität: 24.06.1999 DE 19928964
(43) Veröffentlichungstag der Anmeldung: 27.12.2000
(73) Patentinhaber: Rational AG, 86809 Landsberg a. Lech (DE)
(72) Erfinder: Kohlstrung, Peter, 86830 Kaufering (DE); Wiedemann, Peter, 86836 Klosterlechfeld (DE)
(74) Vertreter: Weber-Bruls, Dorothée, Dr.

(56) Entgegenhaltungen:
- EP-A- 0 010 819
- EP-A- 0 092 277
- WO-A-95/29057
- DE-A- 4 106 348
- DE-A- 19 813 562
- FR-A- 2 664 369
- GB-A- 1 396 292
- GB-A- 2 224 112
- US-A- 4 268 558
- US-A- 4 408 659
- US-A- 4 421 661
- US-A- 5 254 380
- PATENT ABSTRACTS OF JAPAN vol. 1997, no. 10, 31. Oktober 1997 (1997-10-31) -& JP 09 143461 A (TOYOTA CENTRAL RES &DEV LAB INC), 3. Juni 1997 (1997-06-03)
- PATENT ABSTRACTS OF JAPAN vol. 1996, no. 09, 30. September 1996 (1996-09-30) -& JP 08 128652 A (MATSUSHITA ELECTRIC IND CO LTD), 21. Mai 1996 (1996-05-21)
- PATENT ABSTRACTS OF JAPAN vol. 1996, no. 07, 31. Juli 1996 (1996-07-31) -& JP 08 082493 A (EBARA CORP), 26. März 1996 (1996-03-26)

## Beschreibung

Die Erfindung betrifft ein Gargerät mit einem Speicherelement zum Speichern von Energie gemäß dem Oberbegriff von Anspruch 1.

Ein derartiges Gargerät ist aus der EP-A-0 092 277 bekannt.

Es ist, beispielsweise, aus der Automobilbranche bekannt, Energiespeicherelemente zu verwenden, die jeweils im wesentlichen einen mit einer Salzlösung befüllten Behälter umfassen. Dabei wird die Energie sowohl über Konvektion eingetragen als auch entnommen und im wesentlichen in Form von latenter Wärme, entsprechend der Lösungsenergie des verwendeten Salzes, gespeichert. Die bekannte Aufbewahrung der Salzlösung erlaubt jedoch keine schnelle Energieabgabe und vor allem nicht das rasche Erwärmen auf Temperaturen im Bereich von mehreren 100° Celsius.

In der US 4,408,659 ist ein Energiespeicher mit einer hohen Wärmekapazität und Korrosionsbeständigkeit offenbart. Dabei ist ein erstes Material mit einer hohen Wärmespeicherkapazität in gleichmäßig oder statistisch verteilten Hohlräumen, Kammern oder Poren in einem zweiten Material eingebettet. Das zweite Material kann in unterschiedlichen Geometrien ausgeformt sein.

In der EP 0 165 596 A2 ist eine Wärmespeicherstruktur beschrieben, die eine besondere Festigkeit, Haltbarkeit und Wärmeleitfähigkeit aufweist, um insbesondere zur Temperierung von Gebäuden einsetzbar zu sein. Zu diesem Zweck umfaßt die Struktur zumindest zwei sich gegenüberliegende, beabstandete Platten, zwischen denen eine Vielzahl von Zellen angeordnet ist, wobei benachbarte Zellen zumindest zum Teil miteinander verbunden sind und in die Zellen ein aushärtbares Wärmespeichermaterial einfüllbar ist.

Aus der JP 08082493 A ist ein Wärmespeichermaterial mit einem Laminataufbau aus vielen dünnen Filmen bekannt, wobei die Filme jeweils eine Vielzahl von Durchgängen für eine Flüssigkeit zum Wärmeaustausch aufweisen.

In der nicht-vorveröffentlichten deutschen Patentanmeldung P 198 24 172.0 ist ein Gargerät mit einem Energiespeicher- und Energieentnahmesystem beschrieben, bei dem ein Energiespeicher zum Einsatz kommt, der ein Material umfaßt, das zur Wärmespeicherung geeignet ist und/oder bei einer Phasenumwandlung latente Wärme verbraucht oder freisetzt, wie beispielsweise ein Salz.

Aus der EP 0 092 277 A1 ist ein gattungsgemäßes Gargerät in Form eines Kochtopfes mit einem deckelförmigen Rückflußkondensator, der mindestens einen Latentwärmespeicher enthält, bekannt. Durch den Rückflußkondensator werden Kochdämpfe bei Normaldruck kondensiert und der Speise im Rückfluß wieder zugeführt.

Die DE 41 06 348 A1 betrifft eine Vorrichtung zum Erhitzen von Nahrungsmitteln in einem Medium, mit einem Erhitzungsbehälter für das Medium und die Nahrungsmittel, einer Heizvorrichtung, mittels der der Inhalt des Erhitzungsbehälters auf eine gewünschte Erhitzungstemperatur zu bringen ist, und einem Kondensor für die beim Erhitzen entstehenden Dämpfe, der ein in mindestens einen Behälter eingeschlossenen Latentwärmespeichermittel enthält.

Aus der US 4,268,558 ist ein Latentwärmespeicher bekannt, bei dem ein Wärmespeichermittel im wesentlichen einheitlich in einem anorganischen, offenporigen, hydrophilen Schaum eingebettet und gegen Feuchtigkeit abgedichtet ist.

Die WO 95/29057 betrifft eine thermische Barriereschicht, welche aus einer Vielzahl von Zellen aufgebaut ist, die wiederum mit temperaturstabilisierendem Material gefüllt sind. Als ein solches Material können unter anderem Salzhydrate gewählt werden.

Die JP-A-08/128652 beschreibt ein Gargerät, in dem mittels Mikrowellen ein Gargut fertig gegart werden soll. Zu diesem Zwecke ist das Gargut in ein Gehäuse aus Wärmespeichermaterial plazierbar, das bei Beaufschlagung mit Mikrowellenstrahlung zum Fertiggaren des Garguts erwärmt wird.

Der Erfindung liegt daher die Aufgabe zugrunde, das gattungsgemäße Gargerät dahingehend weiterzubilden, daß dem Gargerät Energie rasch entnehmbar ist, die zum schnellen Aufheizen auch auf Temperaturen von mehr als 100°C, wie es im Falle von Gargeräten notwendig ist.

Diese Aufgabe wird erfindungsgemäß gelöst durch die Merkmale von Anspruch 1.

Bevorzugte Ausführungsformen des erfindungsgemäßen Gargeräts sind in den Ansprüchen 2 - 11 beschrieben.

Der Erfindung liegt somit die überraschende Erkenntnis zugrunde, wärmespeicherndes Material, umfassend zumindest ein Salz und/oder eine Salzmischung, vorzugsweise als Schmelze, mit einer möglichst großen Oberfläche, unter gleichzeitiger Vermeidung einer Entmischung im Falle einer Salzmischung, durch das Einschließen in Strukturen mit Abmessungen von weniger als 40 mm in zumindest einer Dimension aufzubewahren, um rasch gespeicherte Energie zum Aufheizen eines Garraums, beispielsweise auf über 100° C, unter Einsatz eines Gebläses entnehmen zu können, das gezielt zu- und abschaltbar ist, um Energie in dem Speicherelement zu speichern oder gespeicherte Energie in den Garraum des Gargerätes abzugeben, wobei durch die Anordnung des Speicherelements in einem By-Pass zudem sichergestellt wird, daß das Speicherelement gegenüber anderen Gerätekomponenten im wesentlichen geschützt angeordnet ist, so daß eine gezielte Regelung der Energieaufnahme sowie Energieabnahme möglich ist.

Ferner kann zur Steuerung der Wärmeleitung eine Oberflächenvergrößerung durch Doppelwandigkeit, Rauigkeit und/oder Rippen erfindungsgemäß herbeigeführt werden. Ein kompakter Aufbau wird durch geeignete Verformung und/oder Plazierung, wie Aufwickeln, gemäß der Erfindung erhalten. Auch kann das Speicherelement eine spezielle Ausformung in Anpassung an die thermische Expansion des verwendeten Speichermediums, also des zumindest einen Salzes und/oder der zumindest einen Salzmischung, umfassen, und/oder ein Totvolumen aufweisen, in das sich das Speichermedium, beispielsweise beim Aufschmelzen, expandieren kann. Weiterhin kann gezielt das Speicherelement lediglich bereichsweise aufgeheizt werden, um die thermische Expansion des Speichermediums gerichtet einzuleiten, wodurch thermische Expansionsspannungen vermieden und somit die Verläßlichkeit sowie die Haltbarkeit des Gargeräts gesteigert werden.

Die Verwendung einer Keramik als Trägersubstanz für das Wärmespeichermaterial ist bevorzugt, da Keramiken mit äußerst geringer thermischer Expansion herstellbar sind. Alternativerweise ist es auch möglich, eine Trägersubstanz auszuwählen, die im wesentlichen den gleichen thermischen Ausdehnungskoeffizienten wie das verwendetete Speichermaterial aufweist.

Weitere Merkmale und Vorteile der Erfindung ergeben sich aus der nachfolgenden Beschreibung, in der drei Ausführungsbeispiele der Erfindung anhand von schematischen Zeichnungen im Einzelnen erläutert sind. Dabei zeigt:
- Figur 1: eine Schnittansicht durch ein erstes Speicherelement, das in dem Gargerät gemäß der Erfindung zum Einsatz kommen kann;
- Figur 2: eine Schnittansicht durch ein zweites Speicherelement, das in dem Gargerät gemäß der Erfindung zum Einsatz kommen kann;
- Figur 3: eine Schnittansicht durch ein drittes Speicherelment, das in dem Gargerät gemäß der Erfindung zum Einsatz kommen kann; und
- Figur 4: eine Schnittansicht durch ein viertes Speicherelement das in dem Gargerät gemäß der Erfindung zum Einsatz kommen kann.

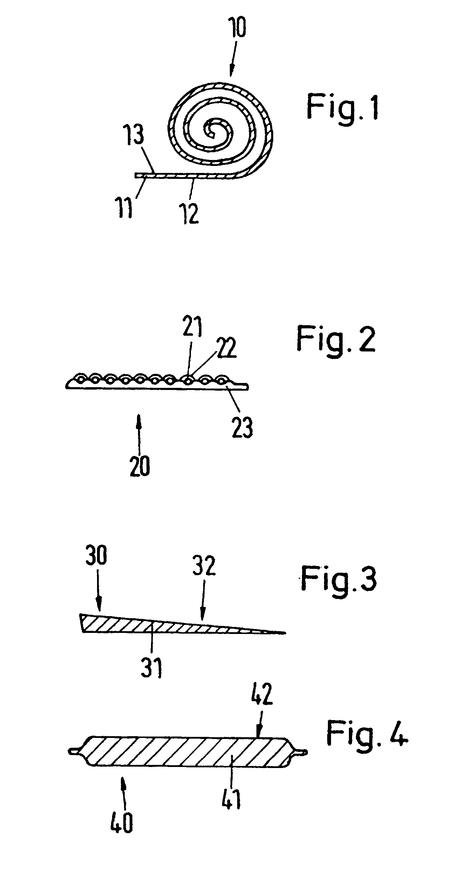

Das in Figur 1 gezeigte Speicherelement 10 besteht im wesentlichen aus einer Salzmischung 11, eingebettet zwischen zwei dünnen Schichten 12, 13, wobei diese Schichtstruktur zum Erhalten einerseits einer großen Oberfläche einen Abstand zwischen den Schichten 12, 13 im mikroskopischen Bereich aufweist und andererseits einer kompakten Form aufgewickelt ist.

Das in Figur 2 gezeigte Speicherelement 20 umfaßt ein poröses Trägermaterial 23, in dessen Poren 22 eine Salzmischung 21 eingebettet ist. Zum Erhalten des Speicherelements 20 kann ein offenporiges Trägermaterial 23 eingesetzt werden, dessen Poren 22 dann mit der Salzmischung 21 aufgefüllt und anschließend verschlossen werden, wobei der Porendurchmesser im mikroskopischen Bereich liegen kann.

In Figur 3 ist ein Speicherelement 30 dargestellt, das eine Salzmischung 31 in einer nadelförmigen Struktur 32 enthält. Beispielsweise kann die Nadel 32 einen mittleren Durchmesser von 10 mm auf einer Länge von 600 mm aufweisen.

Das in Figur 4 gezeigte Speicherelement 40 besteht im wesentlichen aus eine Salzmischung 41 in einem Rohr 42. Der Durchmesser des Rohres 42 kann dem mittleren Durchmesser der Nadel 32 entsprechen.

Selbstverständlich kann eine Vielzahl der gerade beschriebenen Speicherelemente 10, 20, 30 und/oder 40 in einem Gargerät zum Einsatz kommen, insbesondere zur Energieeinsparung sowie einer kurzzeitigen Garraumaufheizung, selbst über das via die externe Spannungsversorgung mögliche Maß hinaus.

### Bezugszeichenliste

- 10: Speicherelement
- 11: Salzmischung
- 12: Wand
- 13: Wand
- 20: Speicherelement
- 21: Salzmischung
- 22: Pore
- 23: Trägermaterial
- 30: Speicherelement
- 31: Salzmischung
- 32: Nadel
- 40: Speicherelement
- 41: Salzmischung
- 42: Rohr

## Patentansprüche

1. Gargerät, umfassend zumindest ein Speicherelement (10, 20, 30, 40) zum Speichern von Energie, die induktiv, resistiv und/oder konvektiv einbringbar und selektiv, zumindest konvektiv, entnehmbar ist, unter Einsatz zumindest eines Salzes und/oder einer Salzmischung (11, 21, 31, 41), das bzw. die in einer nadelförmigen, rohrförmigen, porösen und/oder Schicht-Struktur (12, 13, 22, 23, 32, 42) mit Abmessungen von weniger als 40 mm, bis zu mikroskopischen Abmessungen hinunter, in zumindest einer Dimension, eingeschlossen ist bzw. sind, **gekennzeichnet durch**
ein zu- und abschaltbares Gebläse, über das dem Speicherelement geregelt Energie entnehmbar ist, wobei das Speicherelement in einem By-Pass angeordnet ist.

2. Gargerät nach Anspruch 1, **dadurch gekennzeichnet, daß**
die Schicht-Struktur (12, 13, 22, 23, 32, 42) ein räumliches Gitter oder Gitternetzwerk umfaßt und/oder zumindest zum Teil aufgewickelt ist.

3. Gargerät nach Anspruch 1 oder 2, **dadurch gekennzeichnet, daß**
die Schicht-Struktur (12, 13, 22, 23, 32, 42) in Anpassung an die thermische Expansion des zumindest einen Salzes und/oder der zumindest einen Salzmischung (11, 21, 31, 41) ausgeformt ist, insbesondere einen im wesentlichen sternförmigen Querschnitt und/oder zumindest über einen bestimmten Temperaturbereich ein Totvolumen, in das das zumindest eine Salz und/oder die zumindest eine Salzmischung (11, 21, 31, 41) expandierbar ist, aufweist.

4. Gargerät nach einem der vorangehenden Ansprüche, **dadurch gekennzeichnet, daß**
die Schicht-Struktur (12, 13, 22, 23, 32, 42) eine vergrößerte Außen- und/oder Innenoberfläche zur Erhöhung der thermischen Leitfähigkeit von oder zu dem zumindest einen Salz und/oder der zumindest einen Salzmischung (11, 21, 31, 41), wie in Form von Doppelwandigkeit, Oberflächenrauigkeit, Rippen und/oder dergleichen, aufweist.

5. Gargerät nach einem der vorangehenden Ansprüche, **dadurch gekennzeichnet, daß**
die Schicht-Struktur (12, 13, 22, 23, 32, 42) aus einem Material ausgebildet ist, das eine geringe thermische Expansion aufweist, wobei sie vorzugsweise eine Keramik umfaßt, oder eine thermische Expansion von im wesentlichen gleicher Größe wie das Salz und/oder die Salzmischung (11, 21, 31, 41) aufweist.

6. Gargerät nach einem der vorangehenden Ansprüche, **dadurch gekennzeichnet, daß**
das Salz und/oder die Salzmischung (11, 21, 31, 41) in Form einer Schmelze, zumindest zum Teil auskristallisiert, vorliegt.

7. Gargerät nach Anspruch 6, **dadurch gekennzeichnet, daß**
das Salz und/oder die Salzmischung (11, 21, 31, 41) um seine bzw. ihrer Schmelztemperatur herum, insbesondere zum Verbrauchen oder Freisetzen von latenter Wärme, einsetzbar ist.

8. Gargerät nach einem der vorangehenden Ansprüche, **dadurch gekennzeichnet, daß**
das Speicherelement zumindest teilweise mit einem katalytischen Material umgeben, insbesondere beschichtet, ist.

9. Gargerät nach einem der vorangehenden Ansprüche, **dadurch gekennzeichnet, daß**
das Speicherelement mit einer Heizeinrichtung zusammenwirkt.

10. Gargerät nach Anspruch 9, **dadurch gekennzeichnet, daß**
die Heizeinrichtung zumindest eine um das Speicherelement gewickelte Spule und/oder einen durch das Speicherelement hindurchtretenden Kanal für ein Heizmedium umfaßt.

11. Gargerät nach Anspruch 9 oder 10, **dadurch gekennzeichnet, daß**
die Heizeinrichtung das Speicherelement zur Minimierung thermischer Expansionsspannungen bereichsweise mit Wärme beaufschlagt.

## Claims

1. A cooking device, comprising at least one storage element (10, 20, 30, 40) for storing energy which can be introduced inductively, resistively and/or convectively and can be withdrawn selectively, at least convectively, using at least one salt and/or salt mixture (11, 21, 31, 41) which is/are enclosed in a needle-shaped tubular porous and/or layered structure (12, 13, 22, 23, 32, 42) with dimensions of less than 40 mm, down to microscopic dimensions, in at least one dimension, **characterised by** a fan, which is adapted to be switched on and off and by means of which energy can be withdrawn in regulated form from the storage element, the storage element being disposed in a bypass.

2. A cooking device according to claim 1, **characterised in that** the layered structure (12, 13, 22, 23, 32, 42) comprises a three-dimensional lattice or latticework and/or is at least partially coiled.

3. A cooking device according to claim 1 or 2, **characterised in that** the layered structure (12, 13, 22, 23, 32, 42) is formed in adaptation to the thermal expansion of the at least one salt and/or the at least one salt mixture (11, 21, 31, 41), particularly has a substantially star-shaped cross-section and/or has, at least over a specific temperature range, a dead volume into which the at least one salt and/or the at least one salt mixture (11, 21, 31, 41) can expand.

4. A cooking device according to any one of the preceding claims, **characterised in that** the layered structure (12, 13, 22, 23, 32, 42) has an enlarged outer and/or inner surface to increase the thermal conductivity from or to the at least one salt and/or the at least one salt mixture (11, 21, 31, 41), for example in the form of double walls, surface roughness, ribs and/or the like.

5. A cooking device according to any one of the preceding claims, **characterised in that** the layer structure (12, 13, 22, 23, 32, 42) is formed from a material which has a low thermal expansion, the said structure preferably comprising a ceramic or having a thermal expansion of substantially the same magnitude as the salt and/or the salt mixture (11, 21, 31, 41).

6. A cooking device according to any one of the preceding claims, **characterised in that** the salt and/or the salt mixture (11, 21, 31, 41) is present in the form of a melt, at least partially crystallised out.

7. A cooking device according to claim 6, **characterised in that** the salt and/or the salt mixture (11, 21, 31, 41) is usable around its melting temperature, particularly in order to consume or liberate latent heat.

8. A cooking device according to any one of the preceding claims, **characterised in that** the storage element is surrounded, more particularly coated, at least partially with a catalytic material.

9. A cooking device according to any one of the preceding claims, **characterised in that** the storage element co-operates with a heating device.

10. A cooking device according to claim 9, **characterised in that** the heating device comprises at least one coil wound around the storage element, and/or a duct for a heating medium, said duct passing through the storage element.

11. A cooking device according to claim 9 or 10, **characterised in that** the heating device subjects the storage element to heat in zones in order to reduce thermal expansion stresses.

## Revendications

1. Appareil de cuisson, comprenant au moins un élément de stockage (10, 20, 30, 40) pour stocker de l'énergie, pouvant être introduite par voie inductive, résistive et/ou corrective, et pouvant être prélevée sélectivement, au moins par voie convective, avec utilisation d'au moins sel et/ou d'un mélange de sels (11, 21, 31, 41), qui est, respectivement sont, inclus dans une structure en forme d'aiguille, en forme de tube, poreuse et/ou à couches (12, 13, 22, 23, 32, 42), ayant des dimensions inférieures à 40 mm, jusqu'à descendre au-dessous de dimensions microscopiques, dans au moins une dimension, **caractérisé par** une soufflante, susceptible d'être mise en service et hors service, par l'intermédiaire de laquelle de l'énergie peut être prélevée de façon réglée depuis l'élément accumulateur, l'élément accumulateur étant disposé dans une dérivation.

2. Appareil de cuisson selon la revendication 1, **caractérisé en ce que** la structure à couches (12, 13, 22, 23, 32, 42) comprend une grille tridimensionnelle, ou bien un réseau de grilles tridimensionnelles et/ou est partiellement enroulée.

3. Appareil de cuisson selon la revendication 1 ou 2, **caractérisé en ce que** la structure à couches (12, 13, 22, 23, 32, 42) est formée en adaptation à la dilatation thermique du au moins un sel et/ou du au moins un mélange de sels (11, 21, 31, 41), en particulier présente une section transversale sensiblement en forme d'étoile et/ou, au moins sur une plage de température donnée, un volume mort dans lequel au moins un sel et/ou au moins un mélange de sels (11, 21, 31 ,41) est susceptible de se dilater.

4. Appareil de cuisson selon l'une des revendications précédentes, **caractérisé en ce que** la structure à couches (12, 13, 22, 23, 32, 42) présente une surface extérieure et/ou intérieure agrandie, dans le but d'augmenter la conductivité thermique du sel, ou du au moine un sel et/ou du moins un mélange de sels (11, 21, 31, 41), tel que réalisé à la forme de paroi double, de rugosité de surface, de nervures et/ou analogues.

5. Appareil de cuisson selon l'une des revendications précédentes, **caractérisé en ce que** la structure à couches (12, 13, 22, 23, 32, 42) est réalisée à partir d'un matériau présentant une faible dilatation thermique, comprenant de préférence une céramique, ou présentant une faible dilatation thermique, comprenant de préférence une céramique ou présentant une dilatation thermique sensiblement de la même valeur que celle du sel et/ou du mélange de sels (11, 21, 31, 41).

6. Appareil de cuisson selon l'une des revendications précédentes, **caractérisé en ce que** le sel et/ou le mélange de sels (11, 21, 31, 41) se présente(ent) sous la forme d'une masse fondue, cristallisée au moine en partie.

7. Appareil de cuisson selon la revendication 6, **caractérisé en ce que** le sel et/ou le mélange de sels (11, 21, 31, 41) est/sont utilisable(s) autour de sa température de fusion, en particulier pour consommation et dégagement de chaleur latente.

8. Appareil de cuisson selon l'une des revendications précédentes, **caractérisé en ce que** l'élément accumulateur est entouré, en particulier enduit, au moins partiellement d'un matériau catalytique.

9. Appareil de cuisson selon l'une des revendications précédentes, **caractérisé en ce que** l'élément accumulateur coopère avec un dispositif de chauffage.

10. Appareil de cuisson selon la revendication 9, **caractérisé en ce que** le dispositif de chauffage comprend au moins une bobine enroulée autour de l'élément accumulateur et/ou un canal, passant à travers l'élément accumulateur, pour un fluide chauffant.

11. Appareil de cuisson selon la revendication 9 ou 10, **caractérisé en ce que** le dispositif de chauffage sollicite par zones, avec de la chaleur, l'élément accumulateur, dans le but de minimiser les contraintes issues de la dilatation thermique.
